# EUROPÄISCHE PATENTSCHRIFT

(11) **EP 2 785 818 B1**
(45) Veröffentlichungstag und Bekanntmachung des Hinweises auf die Patenterteilung: **10.10.2018**
(21) Anmeldenummer: 12821170.3
(22) Anmeldetag: 30.11.2012
(51) Int. Cl.: C10L 9/08

(54) **VERFAHREN SOWIE VORRICHTUNG ZUR HYDROTHERMALEN KARBONISIERUNG VON BIOMASSE**
METHOD AND DEVICE FOR THE HYDROTHERMAL CARBONIZATION OF BIOMASS
PROCÉDÉ ET DISPOSITIF DE CARBONISATION HYDROTHERMALE DE BIOMASSE

(30) Priorität: 02.12.2011 DE 102011055983
(43) Veröffentlichungstag der Anmeldung: 08.10.2014
(73) Patentinhaber: Reichhart, Thomas, 92551 Stulln (DE)
(72) Erfinder: Reichhart, Thomas, 92551 Stulln (DE)
(74) Vertreter: Glück Kritzenberger Patentanwälte PartGmbB
(86) Internationale Anmeldenummer: PCT/DE2012/100363
(87) Internationale Veröffentlichungsnummer: WO 2013/079060

(56) Entgegenhaltungen:
- WO-A1-2012/110325
- DE-A1-102008 004 732
- DE-A1-102009 055 976
- US-A1- 2011 124 057

## Beschreibung

Die Erfindung betrifft ein Verfahren zur hydrothermalen Karbonisierung von Biomasse gemäß dem Oberbegriff des Patentanspruchs 1 sowie eine Vorrichtung zur hydrothermalen Karbonisierung von Biomasse gemäß dem Oberbegriff des Patentanspruchs 6.

Unter Biomasse im Sinne der Erfindung werden sämtliche nachwachsenden Rohstoffe, d.h. pflanzliche Biomasse sowie davon abgeleitete tierische Biomasse und deren Stoffwechselprodukte verstanden, also beispielsweise Grüngut, Hackschnitzel, Pflanzen- und Pflanzenreste, Stroh, Silage, Reststoffe aus der Landwirtschaft, Papier- bzw. Klärschlämme etc.

Verfahren und Vorrichtungen zur hydrothermalen Karbonisierung von Biomasse sind aus dem Stand der Technik bereits bekannt. Die hydrothermale Karbonisierung bildet den natürlichen Entstehungsprozess von Braunkohle nach. Dabei wird Biomasse als Ausgangsstoff in einem Reaktor unter einem Druck im Bereich zwischen 10 bar und 35 bar und Temperaturen im Bereich zwischen 180°C und 240°C dehydratisiert und karbonisiert, wobei am Reaktorausgang dann ein Kohleschlamm entnommen werden kann. In diesem Kohleschlamm sind Kohlepartikel enthalten, die durch einen Trocknungs- und/oder Entwässerungsprozess dem Kohleschlamm entzogen werden können. Diese nach dem Trocknungs- und/oder Entwässerungsprozess erhaltenen Kohlepartikel ergeben einen Kohlestaub, der nahezu den gesamten Kohlenstoff der verarbeiteten Biomasse enthält und einen Brennwert im Wesentlichen gleich dem Brennwert von fossiler Braunkohle aufweist.

Die hydrothermale Karbonisierung ist eine exotherme Reaktion, d.h. beim Dehydratations- und Karbonisierungsprozess wird Reaktionsenergie in Form von Wärme freigesetzt.

Des Weiteren ist es bekannt, die hydrothermale Karbonisierung kontinuierlich oder quasikontinuierlich in einem Durchlaufverfahren zu vollziehen, wobei der Karbonisierungsprozess im Reaktorinnenraum während des Einbringens von neuer, zu karbonisierender Biomasse bzw. während der Entnahme des Kohlenschlamms aufrechterhalten wird. Dabei ist es nötig, zum einen den Reaktordruck, zum anderen die Temperatur im Reaktorinnenraum während des Einbringens der neu zu verarbeitenden Biomasse bzw. der Entnahme des Kohlenschlamms mit möglichst geringen Druck- und Temperaturschwankungen aufrechtzuerhalten.

Die DE 10 2008 004 732 A1 beschreibt ein Verfahren zur hydrothermalen Karbonisierung von Biomasse, wobei die Biomasse mit Wasser und wenigstens einem Katalysator in einem Druckbehälter durch Temperatur- und/oder Druckerhöhung in Stoffe wie Kohle, Öl und artverwandte Stoffe umgewandelt wird. Die Biomasse wird dabei vor der Umwandlung oder während der Umwandlung disorganisiert. Bei dem Durchlaufverfahren wird die Biomasse durch eine Fördereinrichtung einem Reaktor zugeführt, in dem die Dehydratisierung und Karbonisierung der Biomasse erfolgt. Der Reaktor ist aus mehreren Druckbehältern aufgebaut, wobei die einzelnen Druckbehälter über Absperrorgane miteinander verbunden sind.

Aus der DE 10 2009 055 976 A1 ist eine Vorrichtung bekannt, die eine Aufbereitungsanlage, eine Überführungsvorrichtung und eine Flugstrom-Vergasungsanlage umfasst. Mit Hilfe der Vorrichtung wird ein Synthesegas aus Biomasse durch Flugstromvergasung zu erzeugt. Dabei wird die Biomasse in der Aufbereitungsanlage einer Grobzerkleinerungsvorrichtung zugeführt, die stromabwärts über eine erste Schleuse mit einer druckbeaufschlagten Karbonisierungsanlage zur hydrothermalen Erzeugung von Karbonisierungskohle aus der Biomasse verbunden ist. Die Karbonisierungsanlage umfasst eine Vorwärmvorrichtung und einen stromabwärts der Vorwärmvorrichtung angeordneten Karbonisierungsreaktor, und ist stromabwärts über eine zweite Schleuse mit zumindest einer Fest-Flüssig-Trennvorrichtung zur Bereitstellung eines Brennstoffs verbunden.

Auch aus der US 2011/0124057 A1 ist ein Verfahren und eine Vorrichtung zur hydrothermalen Karbonisierung von Biomasse bekannt, wobei die Biomasse durch eine Fördereinrichtung zu einem Reaktor transportiert wird, in dem die Biomasse dehydratisiert und karbonisiert wird.

Nachteilig bei den bekannten Verfahren bzw. Vorrichtungen ist, dass aufgrund des Einbringens von Biomasse in den Reaktor und aufgrund der chemischen Vorgänge im Reaktorinneren Strömungen auftreten, die eine unerwünschte Durchmischung von während dem Dehydratations- und Karbonisierungsprozess entstehenden Prozesszwischenprodukten mit dem die Kohlepartikel enthaltenen Kohleschlamm als Prozessendprodukt ergibt. Dadurch werden die Prozessdauer und die Prozessgüte negativ beeinflusst.

Ausgehend hiervon ist es Aufgabe der Erfindung, ein Verfahren und eine Vorrichtung zur hydrothermalen Karbonisierung von Biomasse im Durchlaufverfahren aufzuzeigen, die eine verbesserte Prozessgüte und kürzere Prozessdauer ermöglichen und dabei gleichzeitig einen möglichst gleichmäßigen, kontinuierlichen Dehydratations- und Karbonisierungsprozess im Reaktorinnenraum ermöglichen.

Die Aufgabe wird ausgehend vom Oberbegriff des unabhängigen Patentanspruchs 1 durch dessen kennzeichnende Merkmale gelöst. Eine Vorrichtung zur hydrothermalen Karbonisierung von Biomasse ist Gegenstand des nebengeordneten Patentanspruchs 6.

Bei dem erfindungsgemäßen Verfahren wird Biomasse durch eine Fördereinrichtung zumindest einem Reaktor zugeführt, in dem die Biomasse dehydratisiert und karbonisiert wird und der entstehende Kohleschlamm wird aus dem Reaktor entnommen. Der Reaktor weist eine erste, im oberen Bereich des Reaktors angeordnete Kammer und eine zweite, darunter angeordnete Kammer auf, wobei die Biomasse der ersten Kammer zugeführt wird, die Biomasse in der ersten Kammer in zumindest ein Prozesszwischenprodukt umgewandelt wird, das von der ersten Kammer in die zweite Kammer überführt wird und dass das Prozesszwischenprodukt in der zweiten Kammer in ein Kohlepartikel enthaltendes Prozessendprodukt umgewandelt wird. Durch das Vorsehen mehrerer Kammern innerhalb des Reaktors wird eine Durchmischung von frisch zugeführter Biomasse bzw. erst eine kurze Verweildauer im Reaktor verweilenden Prozesszwischenprodukten mit dem Prozessendprodukt, d.h. dem die Kohlepartikel enthaltenen Kohleschlamm wirksam vermieden. Des Weiteren werden Zirkulationsströmungen, die ebenfalls eine derartige Durchmischung von Prozessprodukten unterschiedlicher Prozessstufen hervorrufen, wirksam vermieden und dadurch die Prozessgüte verbessert bzw. die Prozessdauer erheblich verkürzt.

Die Übergabe des Prozesszwischenprodukts von der ersten Kammer in die zweite Kammer erfolgt erfindungsgemäß schwerkraftbedingt. Hierbei wird ausgenutzt, dass sich die Prozesszwischenprodukte in zunehmendem Maße, d.h. bei längerer Verweildauer im Reaktor zunehmend schwerkraftbedingt nach unten absetzen, sodass ein Übertrag des Prozesszwischenprodukts in die zweite Kammer durch Hilfsmittel, beispielsweise durch Pumpen oder ähnliches nicht nötig wird.

Erfindungsgemäß wird die erste Kammer von der zweiten Kammer durch eine Trenneinrichtung abgetrennt, wobei die Übergabe des Prozesszwischenprodukts von der ersten Kammer in die zweite Kammer durch ein schwerkraftbedingtes Abgleiten der Prozesszwischenprodukte durch zumindest eine Übergabeöffnung in der Trenneinrichtung erfolgt. Die Trenneinrichtung bewirkt hierbei eine nahezu vollständige Abtrennung der zweiten Kammer von der ersten Kammer und dabei gleichzeitig eine Gleitfläche für das Prozesszwischenprodukt, um dieses von der ersten Kammer in die zweite Kammer zu überführen.

Erfindungsgemäß wird in der zweiten Kammer entstehendes Wasser und Gas über zumindest eine in der Trenneinrichtung vorgesehene Durchlassöffnung in die erste Kammer übergeleitet und Wasser durch eine Entnahmeeinrichtung aus der ersten Kammer entnommen. Vorzugsweise sind mehrere derartige Durchlassöffnungen umfangsseitig verteilt vorgesehen. Dadurch wird erreicht, dass diese leichteren Medien über die Durchlassöffnungen in die erste Kammer entweichen können und dadurch Platz für über die Übergabeöffnung zugeführte Prozesszwischenprodukte freigeben. Die Durchlassöffnung ist insbesondere daher notwendig, da insbesondere in der zweiten Kammer von dem Prozesszwischenprodukt Wassermoleküle abgespalten werden, d.h. es entsteht überschüssiges Wasser, das aus der zweiten Kammer über die Durchlassöffnungen entweichen kann.

Besonders bevorzugt wird der Reaktor durch eine Durchleitung von Gasen oder Dämpfen temperaturstabilisiert. Insbesondere können durch einen in dem Reaktor vorgesehenen Wärmetauscher, der insbesondere ein Rohrwärmetauscher ist, Rauchgase aus einem Verbrennungsprozess oder Wasserdampf durchgeleitet werden.

Derartige Rauchgase können insbesondere aus einem Biomasseofen oder aus einem Blockheizkraftwerk stammen. Zur Temperatursteuerung des Rauchgases oder Dampfes können Mischeinrichtungen vorgesehen sein, die eine gesteuerte Beimischung eines gewünschten Anteils an Frisch- bzw. Kaltluft zu dem Rauchgas bzw. Dampf ermöglichen. Dadurch kann der Wärmeeintrag in den Reaktorinnenraum durch den beigefügten Anteil an Frisch- bzw. Kaltluft gesteuert werden. Eine derartige Temperaturstabilisierung ist insbesondere beim Hochfahren des Dehydratations- und Karbonisierungsprozesses nötig, damit der Dehydratations- und Karbonisierungsprozess erst ermöglicht wird. Des Weiteren ist bei Verwendung von Biomasse mit geringem Trockengehalt eine Temperaturstabilisierung nötig, um die Reaktortemperatur durch Aufheizen in einem gewünschten Temperaturbereich zu halten. Ferner ist eine Regelung der Reaktortemperatur auch für die Güte bzw. den Brennwert der entstehenden Kohlepartikel entscheidend.

In einem besonders bevorzugten Ausführungsbeispiel wird die Biomasse vor der Einbringung in den Reaktor in einer Vorwärmeinrichtung erwärmt. Dadurch kann verhindert werden, dass durch das Einbringen neuer Biomasse in den Reaktor ein erheblicher Temperaturabfall entsteht, der den Dehydratations- und Karbonisierungsprozess negativ beeinflusst. Ferner können durch das Aufheizen der Biomasse Strömungen vermieden werden, die aufgrund des Temperaturunterschieds von neu zugeführter Biomasse zu den bereits im Reaktor enthaltener Biomasse bzw. Prozesszwischenprodukten entstehen.

Besonders bevorzugt erfolgt die Erwärmung der Biomasse durch Entnahme von durch die Dehydratation entstehendem Dehydratwasser im flüssigen Zustand aus dem Reaktor, durch unmittelbare Zuführung des Dehydratwassers zur Vorwärmeinrichtung und Vermischung des Dehydratwassers mit der Biomasse innerhalb der Vorwärmeinrichtung. Aufgrund der Tatsache, dass Wasser im flüssigen Zustand im Vergleich zu Wasserdampf eine größere Menge an Wärmeenergie pro Volumeneinheit aufweist, wird durch die Entnahme eines definierten Volumens von Dehydratwasser im flüssigen Zustand aus dem Reaktor eine größere Menge an Wärmeenergie der Vorwärmeinrichtung zugeführt als bei der Entnahme desselben Volumens an Wasserdampf. Damit muss zur Erzielung eines bestimmten Wärmeeintrags in die Biomasse ein im Vergleich zur Verwendung von Wasserdampf geringeres Volumen an Dehydratwasser entnommen werden, sodass der sich dort vollziehende Karbonisierungsprozess nur geringfügig beeinträchtigt wird.

Insbesondere bei Verwendung von Biomasse mit einem hohen Trockengehalt wird durch die Durchmischung der Biomasse mit dem Dehydratwasser eine verbesserte, gleichmäßigere Vorwärmung der Biomasse im Vergleich zu herkömmlich verwendeten Wärmetauschersystemen erreicht, da die Wärmetauscher bei der Verwendung relativ trockener Biomasse, insbesondere Biomasse mit einem Trockengehalt größer als 20% zur Verkrustung an den Wärmeübertragungsflächen neigen und dadurch der Wirkungsgrad der Wärmetauscher abnehmen.

Die Erfindung betrifft des Weiteren eine Vorrichtung zur hydrothermalen Karbonisierung von Biomasse im Durchlauf mit einer Fördereinrichtung für Biomasse zu zumindest einem Reaktor, in dem die Biomasse dehydratisiert und karbonisiert wird, wobei der Reaktor zumindest eine erste Kammer und eine zweite Kammer aufweist, die durch eine Trenneinrichtung zur Unterbindung von Strömungen voneinander zumindest abschnittsweise getrennt sind. Mittels der Trenneinrichtung wird erreicht, dass eine Durchmischung von Prozesszwischenprodukten mit dem die Kohlepartikel enthaltenen Kohleschlamm als Prozessendprodukt verhindert wird, da zwischen der zweiten Kammer und der ersten Kammer keine Strömungen auftreten können, die eine derartige Durchmischung hervorrufen würden.

Erfindungsgemäß ist die erste Kammer oberhalb der zweiten Kammer vorgesehen. Dadurch wird ermöglicht, dass das in der ersten Kammer durch den Karbonisierungsprozess entstehende Prozesszwischenprodukt, das insbesondere ankarbonisierte Biomasse ist, schwerkraftbedingt in die zweite Kammer überführt werden kann. Erfindungsgemäß ist die Trenneinrichtung trichterförmig und sich zur zweiten Kammer hin verjüngend ausgebildet. Somit kann das in der ersten Kammer entstehende Prozesszwischenprodukt an der Trenneinrichtung abgleiten und in die zweite Kammer gelangen.

Erfindungsgemäß weist die Trenneinrichtung zumindest eine Übergabeöffnung für die Übergabe von Prozesszwischenprodukten von der ersten Kammer in die zweite Kammer und zumindest eine Durchlassöffnung für in der Dehydratationskammer entstehendes Wasser und Gas auf. Im Bereich der ersten, oberen Kammer ist erfindungsgemäß eine Entnahmeeinrichtung zur Entnahme von Wasser aus der ersten, oberen Kammer vorgesehen. Über die Übergabeöffnung, die bevorzugt im tiefstliegenden Bereich der Trenneinrichtung vorgesehen ist wird ein Durchtritt der Prozesszwischenprodukte in die zweite Kammer ermöglicht. Die Durchlassöffnungen dienen zur Ableitung von Wasser und Gasen von der zweiten Kammer in die erste Kammer. Bei dem sich insbesondere in der zweiten Kammer vollziehenden Prozess der Dehydratation werden Wassermoleküle von dem Prozesszwischenprodukt abgetrennt, sodass in der Dehydratationskammer überschüssiges Wasser entsteht. Dieses Wasser, das aufgrund der Schwerkraft nach oben steigt, kann durch die Durchlassöffnungen hindurch in die erste Kammer entweichen. Gleiches gilt für die in der zweiten Kammer entstehenden Gase oder Dämpfe.

Bevorzugt ist die zumindest eine Durchlassöffnung in den von der Übergabeöffnung entfernt liegenden Randbereichen der Trenneinrichtung,
insbesondere in den der Reaktorwand benachbarten Randbereichen angeordnet. Dort weist die zweite Kammer vorzugsweise ihre höchstliegenden Abschnitte auf, sodass die entstehenden Gase bzw. das Wasser sich in diesen Bereichen sammeln und durch die Durchlassöffnungen hindurch in die erste Kammer übertreten können.

Besonders bevorzugt ist die Trenneinrichtung im unteren Reaktorabschnitt, d.h. in der unteren Hälfte des Reaktors vorgesehen. Weiterhin bevorzugt weist die zweite Kammer ein geringes Volumen auf als die erste Kammer. Diese Dimensionierung trägt der Tatsache Rechnung, dass im oberen Reaktorabschnitt neben der zugeführten Biomasse und der zumindest teilweise ankarbonisierten Biomasse sich auch ein Großteil von Dehydratwasser befindet, das ein größeres Volumen innerhalb des Reaktors einnimmt. Dadurch wird sichergestellt, dass das der zweiten Kammer zugeführte Prozesszwischenprodukt zumindest eine gewisse Verweildauer, vorzugsweise zwischen zwei und sechs Stunden in der ersten Kammer verbracht hat. Die anschließende Verweildauer in der zweiten Kammer beträgt vorzugsweise zwischen 6 und 10 Stunden.

Besonders bevorzugt weist zumindest die als Gleitfläche dienende Oberseite der Trenneinrichtung und/oder die gesamte Innenwandung des Reaktors und die Trenneinrichtung eine Beschichtung aus einem hochgleitfähigen Material auf. Dieses hochgleitfähige Material kann insbesondere ein Polytetrafluorethylen (PTFE) sein, wobei eine Beschichtung mit einer Schichtdicke von 15 bis 20 *µ*m bevorzugt wird. Die Beschichtung der Trenneinrichtung und/oder des Reaktors und seiner Innenwandung bietet den entscheidenden Vorteil, dass die Gleitfähigkeit der Prozesszwischenprodukte bzw. Endprodukte an der Reaktorwandung bzw. der Trenneinrichtung entscheidend verbessert wird, so dass sich auch bei längerer kontinuierlicher Benutzungsdauer des Reaktors keine den Prozess negativ beeinflussenden Ablagerungen bilden. Insbesondere kann auch der Wärmetauscher, insbesondere die Rohrelemente des Wärmetauschers mit einer derartigen Beschichtung aus einer-n hochgleitfähigen Material versehen sein. Besonders bevorzugt wird ein kondenswasserbeständiges und ein gegen hohe Temperaturunterschiede an den Rohrelementen des Wärmetauschers beständiges Polytetrafluorethylen verwendet.

Unter der unmittelbaren Zuführung des Dehydratwassers zur Vorwärmeinrichtung wird eine Zuführung beispielsweise mittels Rohrleitungen ohne weitere Vorrichtungen, insbesondere Verdampfer zum Entspannen des Wassers, verstanden. Unter unmittelbarer Zuführung ist jedoch auch eine Rohrleitung oder ein Rohrleitungssystem enthaltend zumindest eine Sperreinrichtung, insbesondere ein Ventil zum Verschluss der Vorwärmeinrichtung und/oder des Reaktors zu verstehen.

Unter Dehydratwasser im Sinne der Erfindung wird im Reaktor vorhandene Flüssigkeit verstanden, die durch der Biomasse enthaltene bzw. beigemischte Flüssigkeit und/oder während des Dehydratationsprozess von der Biomasse abgespaltene Wassermoleküle gebildet wird.

Der Ausdruck "im Wesentlichen" bedeutet im Sinne der Erfindung Abweichungen vom jeweils exakten Wert um +/-10%, bevorzugt um +/-5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung des Ausführungsbeispiels und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird nachfolgend anhand eines Ausführungsbeispiels im Zusammenhang mit den Figuren näher erläutert. Es zeigen:
- Fig. 1: beispielhaft eine erfindungsgemäße Vorrichtung zur hydrothermalen Karbonisierung von Biomasse in einer schematischen Darstellung;

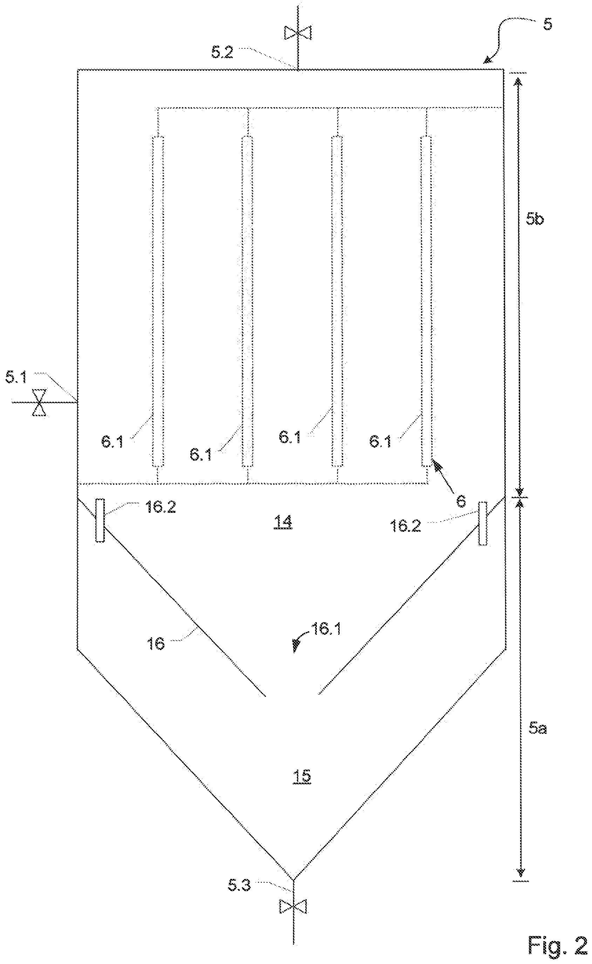

- Fig. 2: beispielhaft einen Reaktor zur Verwendung in einer Vorrichtung zur hydrothermalen Karbonisierung von Biomasse in einer schematischen Darstellung.

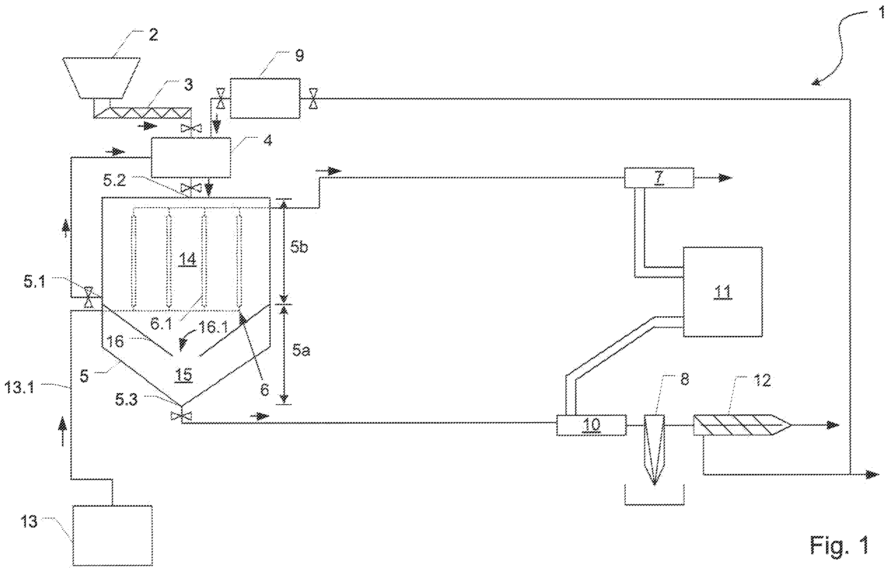

In der Figur 1 ist mit dem Bezugszeichen 1 eine Anlage zur hydrothermalen Karbonisierung (HTC) gezeigt. Die Anlage 1 ist hierbei zum Durchführen eines HTC-Verfahrens als Durchlaufverfahren ausgebildet., d.h., dass die Anlage 1 einen kontinuierlichen oder quasikontinuierlichen Betrieb beim Einbringen der Biomasse in den Reaktor bzw. bei der Entnahme der Kohle aus dem Reaktor 5 ermöglicht, ohne dass der Karbonisierungsprozess im Reaktorinnenraum vollständig unterbrochen werden würde.

Die in der Anlage 1 verarbeitete Biomasse, die insbesondere trockene Biomasse mit einem Trockengehalt ≥ 30% sein kann, wird an einer Biomasseaufgabe 2 in die Anlage 1 eingebracht und mittels einer Fördereinrichtung 3 gesteuert bzw. zeitlich intermittierend der Vorwärmeinrichtung 4 zugeführt. Die Fördereinrichtung 3 kann hierbei eine Förderschnecke, ein Förderband, ein Schubbodenförderer oder bei Biomasse mit hohem Wasseranteil auch eine Pumpe sein. In der Vorwärmeinrichtung 4, die vorzugsweise ein druckfester, abgesehen von den mit Ventilen verschließbaren Zu- und Ableitungen geschlossener Behälter ist, wird die Biomasse erwärmt, und zwar durch unmittelbares Einbringen des Dehydratwassers in die Biomasse und durch Vermischen des Dehydratwassers mit der Biomasse, wobei das Dehydratwasser zumindest teilweise durch Dehydratation im Reaktor 5 entsteht. Dieses Wasser weist eine Temperatur im Bereich zwischen 180°C und 240°C auf und kann aufgrund seiner hohen spezifischen Masse optimal für einen Wärmeeintrag in die zuvor zu erwärmende Biomasse verwendet werden. Beim Zuführen des Dehydratwassers ist vorzugsweise die Vorwärmeinrichtung 4 druckdicht verschlossen.

Zur Entnahme des Dehydratwassers aus dem Reaktor 5 ist vorzugsweise in zwischen dem oberen und dem unteren Reaktorabschnitt 5a, 5c liegenden mittleren Reaktorabschnitt 5b, eine Entnahmeeinrichtung 5.1 vorgesehen, über die das Dehydratwasser vorzugsweise über zumindest ein Ventil gesteuert entzogen und über eine unmittelbare fluidische Verbindung der Vorwärmeinrichtung 4 zugeführt werden kann.

Nach der zumindest teilweisen Vorwärmung der Biomasse wird vorzugsweise der Druck innerhalb der Vorwärmeinrichtung 4, der bereits durch die Zuführung des Dehydratwassers angestiegen ist, auf einen Druck zumindest gleich dem Druck im Inneren des Reaktors 5 erhöht, wobei Drücke von 10 bar bis 33 bar bevorzugt sind. Die Druckerhöhung erfolgt mittels eines Druckerzeugers 9 oder einem mit dem Druckerzeuger 9 gekoppelten Druckspeicher. Nach der Erhöhung des Drucks in der Vorwärmeinrichtung 4 wird die vorgewärmte Biomasse bzw. das Gemisch der Biomasse mit dem Dehydratwasser über den Einlass 5.2 dem Reaktor 5 zugeführt. Für den Fall, dass in der Vorwärmeinrichtung 4 der gleiche Druck wie im Reaktor 5 vorherrscht, wird die Biomasse schwerkraftbedingt in den Reaktor 5 eingebracht. Bevorzugt ist eine Erhöhung des Drucks in der Vorwärmeinrichtung 4 über den Druck im Reaktor 5, sodass ein Verstopfen des Auslasses der Vorwärmeinrichtung 4 bzw. des Einlasses 5.2 des Reaktors 5 wirksam vermieden wird.

Nach dem Einbringen der Biomasse in den Reaktor 5 wird diese Biomasse der hydrothermalen Karbonisierung unterzogen, wobei aus der Biomasse in dem Dehydratations- und Karbonisierungsprozess Wassermoleküle abgespalten werden und dabei Kohlepartikel entstehen.

Der Reaktor 5 weist im gezeigten Ausführungsbeispiel zwei Kammern 14, 15 auf, wobei die erste, im oberen Bereich des Reaktors 5 befindliche Kammer nachfolgend als Karbonisierungskammer 14 und die darunter angeordnete Kammer nachfolgend als Dehydratationskammer 15 bezeichnet wird. Der abgesehen von dem Einlass 5.2 bzw. dem Auslass 5.3 und der Entnahmeeinrichtung 5.1 geschlossen ausgebildete Reaktor weist zur zumindest abschnittsweisen Abtrennung der Karbonisierungskammer 14 bzw. der Dehydrationskammer 15 eine Trenneinrichtung 16 auf. Die über den Einlass 5.2 dem Reaktor 5 zugeführte Biomasse gelangt zunächst in die Karbonisierungskammer 14 und wird vorzugsweise in einer Zeitdauer von zwei bis sechs Stunden einem Karbonisierungsprozess unterzogen, wobei nach diesem Karbonisierungsprozess zumindest ein Prozesszwischenprodukt entsteht, das schwerkraftbedingt im Reaktor 5 nach unten sinkt und dabei durch die in der Trenneinrichtung 16 vorhandene Übergabeöffnung 16.1 in die Dehydratationskammer 15 gelangt. In dieser Dehydratationskammer 15 wird das Prozesszwischenprodukt weiterhin dem Karbonisierungs- und Dehydratationsprozess unterzogen, und zwar vorzugsweise in einer Zeitdauer zwischen sechs und zehn Stunden. Im unteren Bereich der Dehydratationskammer 15 des Reaktors 5, d.h. im Bereich des Auslasses 5.3 sammelt sich dann ein die Kohlepartikel enthaltendes Prozessendprodukt, insbesondere ein Kohleschlamm an, der dann vorzugsweise kontinuierlich über den Auslass 5.3 dem Reaktor 5 entzogen wird.

Besonders bevorzugt wird das Prozesszwischenprodukt durch schwerkraftbedingtes Abgleiten an der Trenneinrichtung 16 von der Karbomsierungskammer 14 in die Dehydratationskammer 15 überführt. Hierzu wird die Trenneinrichtung 16 durch zumindest eine Schrägfläche gebildet, die zu der Übergabeöffnung 16.1 hin abfallend ausgebildet ist, sodass das Prozesszwischenprodukt an dieser zumindest einen Schrägfläche abgleitet und zur Übergabeöffnung 16.1 gelangt. Die Trenneinrichtung 16 kann besonders bevorzugt trichterförmig ausgebildet sein und mittig bzw. im Wesentlichen mittig die Übergabeöffnung 16.1 aufweisen.

Um ein Aufsteigen von in der Dehydratationskammer 15 entstehendem Wasser oder Gasen bzw. Dämpfen von der Dehydratationskammer 15 in die Karbonisierungskammer 14 zu ermöglichen, weist die Trenneinrichtung 16 zumindest eine Durchlassöffnung 16.2 auf. Vorzugsweise sind mehrere umfangsseitig im Innenraum des Reaktors 5 verteilte Durchlassöffnungen 16.2 vorgesehen. Diese Durchlassöffnungen 16.2 sind im oberen Bereich der Dehydratationskammer 15, d.h. im von der Übergabeöffnung 16.1 beabstandeten Randbereich der Trenneinrichtung 16, an dem diese mit der Reaktorwandung verbunden ist, vorgesehen. In diesen Randbereichen sammelt sich aufgrund der schrägen Ausrichtung der Flächen der Trenneinrichtung 16 das aufsteigende Wasser bzw. die Gase oder Dämpfe und können von dort aus mittels der Durchlassöffnungen 16.2 in die Karbonisierungskammer 14 übertreten. Die Durchlassöffnungen 16.2 sind im gezeigten Ausführungsbeispiel mittels Rohrdurchführungen durch die Trenneinrichtung 16 gebildet, wobei dadurch vorteilhaft ein Zusetzen bzw. Verkrusten der Durchlassöffnungen 16.2 wirksam vermieden wird.

Besonders bevorzugt ist die Trenneinrichtung 16 in dem unteren Reaktorabschnitt 5a vorgesehen, wobei vorzugsweise das Volumen der Dehydrationskammer 15 kleiner ist als das Volumen der Karbonisierungskammer 14.

Um ein verbessertes Abgleiten des Prozesszwischenprodukts an der Trenneinrichtung 16 zu ermöglichen, ist diese Trenneinrichtung 16 zumindest an der die Gleitfläche bildenden Oberseite mit einer Beschichtung aus einem hochgleitfähigen Material versehen. Des Weiteren können auch weitere Bereich des Reaktorinnenraums, insbesondere die gesamte Reaktorinnenwandung, die gesamte Trenneinrichtung 16 sowie ein Im Reaktor enthaltender Wärmetauscher 6 mit einer derartigen Beschichtung aus hochgleitfähigem Material versehen sein. Das hochgleitfähige Material kann insbesondere ein Polytetrafluorethylen (PTFE) sein. Bevorzugt ist hierbei eine Beschichtung mit einer Schichtdicke von 15 *µ*m bis 20 *µ*m.

In einem bevorzugten Ausführungsbeispiel werden der in den Reaktor eingebrachten Biomasse ebenfalls Katalysatoren beigefügt, die eine Versäuerung bzw. Alkalisierung der Biomasse bewirken, wobei durch den Grad der Zugabe derartiger Katalysatoren die Struktur der entstehenden Kohlepartikel bestimmt wird. Ferner kann durch geeignete Zugabe von Katalysatoren der Karbonisierungsprozess beschleunigt werden. Aus dem Auslass 5.3 des Reaktors 5 wird ein wässriger Kohleschlamm entnommen, der zur Restwärmeausnutzung über einen Wärmetauscher 10 geführt wird. Die Entnahme des Kohlenschlamms erfolgt hierbei vorzugsweise kontinuierlich, insbesondere gesteuert über den Füllstand in dem Reaktor 5. Über den Wärmetauscher 10 wird dabei dem Kohleschlamm zumindest teilweise die darin enthaltende Wärmeenergie entzogen. Diese Wärmeenergie wird einem Wärmespeicher 11 zugeführt, der als Zwischenpuffer für die entzogene Wärmeenergie fungiert.

Der Kohleschlamm wird ferner über eine Filtereinrichtung 8 geführt, die vorzugsweise dem Wärmetauscher 10 nachgeschaltet vorgesehen ist, sodass der bereits zumindest größtenteils abgekühlte Kohleschlamm die Filtereinrichtung 8 durchfließt und dabei die im Kohleschlamm enthaltenden Fremdstoffe abgeschieden werden. Derartige Fremdstoffe können in der Biomasse enthaltene Kunststoffe, Metalle, Sand etc. sein. Vorzugsweise ist eine weitere Fremdstoffsortierung im Bereich der Biomasseaufgabe 2 oder der Fördereinrichtung 3 vorgesehen, mittels der großflächige oder großvolumige Fremdstoffe aus der zu verarbeitenden Biomasse aussortiert werden. Der durch die Filtereinrichtung 8 gefilterte Kohleschlamm wird einer Trocknungs- und Entwässerungseinrichtung 12 zugeführt, in der der Kohleschlamm in staubförmige Kohlepartikel bzw. in Kohlestaub umgewandelt wird. Dieser Kohlestaub kann entweder direkt in ein Vorratslager eingeblasen oder einer Pelletiereinrichtung zugeführt werden, in der die Kohlepartikel durch Zugabe von Stärke, insbesondere von Mais und/oder Kartoffelstärke vernetzt und in Pellets verpresst werden.

Die beim Entwässerungsvorgang entstehende Flüssigkeit kann abhängig von der verwendeten Biomasse entweder direkt als Dünger verwendet werden oder bei Verwendung von phosphathaltiger bzw. schwermetallhaltiger Biomasse ausgefällt und abfiltriert werden, sodass diese Phosphate und Schwermetalle zumindest größtenteils aus der Flüssigkeit entfernt werden. Ein Teil der mittels der Trocknungs- und Entwässerungseinrichtung 12 aus dem Kohlenschlamm entzogenen Flüssigkeit kann prozessintern weiterverwendet und dem Druckerzeuger 9 zugeführt werden, sodass die Flüssigkeit zur Druckerhöhung in der Vorwärmeinrichtung 4 verwendet werden kann.

Bevorzugt ist die die Anlage 1 mit einer Heizeinrichtung 13 verbunden, die beispielsweise ein Biomasseofen, ein Blockheizkraftwerk oder eine fossilen Brennstoff benutzende Heizeinrichtung sein kann. Die aus der Heizeinrichtung 13 entstehenden Gase, insbesondere Rauchgase werden dem Reaktor 5 über Rauchgasleitungen 13.1 zugeführt. Im Inneren des Reaktors 5 ist zumindest ein Wärmetauscher 6 vorgesehen, der insbesondere ein Rohrwärmetauscher ist und mehrere vorzugsweise vertikal angeordnete Rohrelemente 6.1 aufweist, die mit den Rauchgasleitungen 13.1 verbunden sind und vom Rauchgas durchströmt werden. Der Wärmetauscher 6 ist im gezeigten Ausführungsbeispiel im oberen Reaktorabschnitt 5b des Reaktors 5, d.h. in der Karbonisierungskammer 14 vorgesehen. Jedoch kann sich der Wärmetauscher 6 auch in den unteren Reaktorabschnitt 5a erstrecken. Durch den vom Rauchgas durchströmten Wärmetauscher 6 wird eine Erwärmung der im Reaktorinneren enthaltenen Biomasse bzw. Flüssigkeit bewirkt. Nach dem Durchströmen des Wärmetauschers 6 werden die Rauchgase aus dem Reaktor 5 geführt und vorzugsweise einem Wärmetauscher 7 zugeführt, mittels dem dem Rauchgas Restwärmeenergie entzogen und dem Wärmespeicher 11 zugeführt wird.

Bevorzugt ist in den Rauchgasleitungen 13.1 zwischen der Heizeinrichtung 13 und dem Reaktor eine Mischeinrichtung vorgesehen, die eine Vermischung des Rauchgases mit einer gesteuerten Menge Kaltluft bzw. Frischluft ermöglicht. Dadurch wird die Rauchgastemperatur bzw. der Wärmeeintrag in den Reaktor 5 über den Wärmetauscher 6 gesteuert. Der benötigte Wärmeeintrag in den Reaktor 5 hängt maßgeblich von der verwendeten Biomasse bzw. dem Trockenanteil dieser Biomasse ab, wobei Biomasse mit einem höheren Trockenanteil einen geringeren Wärmeeintrag benötigt als Biomasse mit einem erhöhten Trockenanteil. Durch die temperaturgesteuerte Zuführung von Rauchgas kann dem jeweiligen benötigten Wärmebedarf abhängig von der bearbeiteten Biomasse Rechnung getragen werden.

Die Erfindung wurde voranstehend an einem Ausführungsbeispiel beschrieben. Es versteht sich, dass zahlreiche Modifikationen und Änderungen möglich sind, ohne dass hierdurch der Erfindungsgedanke verlassen wird.

### Bezugszeichenliste

- 1: HTC-Anlage
- 2: Biomasseaufgabe
- 3: Fördereinrichtung
- 4: Vorwärmeinrichtung
- 5: Reaktor
- 5a: unterer Reaktorabschnitt
- 5b: oberer Reaktorabschnitt
- 5.1: Entnahmeeinrichtung
- 5.2: Einlass
- 5.3: Auslass
- 6: Wärmetauscher
- 6.1: Rohrelement
- 7: Wärmetauscher
- 8: Filtereinrichtung
- 9: Druckerzeuger
- 10: Wärmetauscher
- 11: Wärmespeicher
- 12: Trocknungs- und Entwässerungseinrichtung
- 13: Heizeinrichtung
- 13.1: Rauchgasleitung
- 14: Karbonisierungskammer
- 15: Dehydratationskammer
- 16: Trenneinrichtung
- 16.1: Übergabeöffnung
- 16.2: Durchlassöffnung

## Patentansprüche

1. Verfahren zur hydrothermalen Karbonisierung von Biomasse im Durchlauf, bei dem Biomasse durch eine Fördereinrichtung (3) zumindest einem Reaktor (5) zugeführt wird, in dem die Biomasse dehydratisiert und karbonisiert wird und bei dem der entstehende Kohleschlamm aus dem Reaktor (5) entnommen wird, wobei der Reaktor (5) eine erste, im oberen Bereich des Reaktors angeordnete Kammer (14) und eine zweite, darunter angeordnete Kammer (15) aufweist, wobei die Biomasse der ersten Kammer (14) zugeführt und die Biomasse in der ersten Kammer (14) in zumindest ein Prozesszwischenprodukt umgewandelt wird, das von der ersten Kammer (14) in die zweite Kammer (15) überführt wird, wobei das Prozesszwischenprodukt in der zweiten Kammer (15) in ein Kohlepartikel enthaltendes Prozessendprodukt umgewandelt wird, wobei die erste Kammer (14) von der zweiten Kammer (15) durch eine trichterförmige Trenneinrichtung (16) abgetrennt wird und die Übergabe des Prozesszwischenprodukts von der ersten Kammer (14) in die zweite Kammer (15) schwerkraftbedingt durch zumindest eine Übergabeöffnung (16.1) in der Trenneinrichtung (16) erfolgt, wobei die Trenneinrichtung (16) ein schwerkraftbedingtes Abgleiten des Prozesszwischenprodukts in die zweite Kammer (15) bewirkt und durch die Trenneinrichtung (16) Strömungen zwischen der ersten Kammer (14) und der zweiten Kammer (15) verringert oder unterdrückt werden,
**dadurch gekennzeichnet, dass**
in der zweiten Kammer (15) entstehendes Wasser und Gas über zumindest eine in der Trenneinrichtung (16) vorgesehene Durchlassöffnung (16.2) in die erste Kammer (14) übergeleitet werden und Wasser durch eine Entnahmeeinrichtung (5.1) aus der ersten Kammer (14) entnommen wird.

2. Verfahren nach Anspruch 1, **dadurch gekennzeichnet, dass** der zumindest eine Reaktor (5) durch eine Durchleitung von Gasen oder Dämpfen temperaturstabilisiert wird.

3. Verfahren nach Anspruch 2, **dadurch gekennzeichnet, dass** als Gase Rauchgase aus einem Verbrennungsprozess oder Wasserdampf verwendet werden und/oder die Gase oder Dämpfe durch mindestens einen in dem zumindest einen Reaktor (5) vorgesehenen Wärmetauscher (6) geleitet werden.

4. Verfahren nach einem der vorhergehenden Ansprüche, **dadurch gekennzeichnet, dass** die Biomasse vor der Einbringung in den Reaktor (5) in einer Vorwärmeinrichtung (4) erwärmt wird.

5. Verfahren nach Anspruch 4, **dadurch gekennzeichnet, dass** die Erwärmung der Biomasse durch Entnahme von durch die Dehydratation entstehendem Dehydratwasser im flüssigen Zustand aus dem Reaktor (5) durch unmittelbare Zuführung des Dehydratwassers zur Vorwärmeinrichtung (4) und Vermischung des Dehydratwassers mit der Biomasse in der Vorwärmeinrichtung (4) erfolgt.

6. Vorrichtung zur hydrothermalen Karbonisierung von Biomasse im Durchlauf, mit einer Fördereinrichtung (3) für Biomasse zu zumindest einen Reaktor (5), in dem die Biomasse dehydratisiert und karbonisiert wird, wobei der Reaktor (5) zumindest eine erste, obere Kammer (14) und eine zweite, untere Kammer (15) aufweist, wobei die erste, obere Kammer (14) und die zweite, untere Kammer (15) durch eine Trenneinrichtung (16) zur Unterbindung von Strömungen voneinander zumindest abschnittsweise getrennt sind, wobei die Trenneinrichtung (16) trichterförmig, sich zur zweiten Kammer (15) hin verjüngend ausgebildet ist und die Trenneinrichtung (16) zumindest eine Übergabeöffnung (16.1) für die Übergabe von Prozesszwischenprodukten von der ersten Kammer (14) in die zweite Kammer (15) aufweist,
**dadurch gekennzeichnet, dass**
die Trenneinrichtung (16) zumindest eine Durchlassöffnung (16.2) für in der zweiten Kammer (15) entstehendes Wasser und Gas aufweist und im Bereich der ersten, oberen Kammer (14) eine Entnahmeeinrichtung (5.1) zur Entnahme von Wasser aus der ersten, oberen Kammer (14) vorgesehen ist.

7. Vorrichtung nach Anspruch 6, **dadurch gekennzeichnet, dass** die Trenneinrichtung (16) in dem unteren Reaktorabschnitt (5a) des Reaktors (5) vorgesehen ist.

8. Vorrichtung nach einem der Ansprüche 6 und 7, **dadurch gekennzeichnet, dass** zumindest die als Gleitfläche dienende Oberseite der Trenneinrichtung (16) und/oder die gesamte Innenwandung des Reaktors (5), die Trenneinrichtung (16) und der Wärmetauscher (6) eine Beschichtung aus einem hochgleitfähigen Material aufweisen und/oder dass das hochgleitfähige Material Polytetrafluorethylen (PTFE) ist und/oder dass die Beschichtung eine Schichtdicke von 15µm bis 20µm aufweist.

## Claims

1. A method for hydrothermal carbonisation of biomass during throughput, in which method biomass is fed by a conveying device (3) to at least one reactor (5), in which the biomass is dehydrated and carbonised, and in which the resulting carbon sludge is removed from the reactor (5), wherein the reactor (5) comprises a first chamber (14) arranged in the upper region of the reactor and a second chamber (15) arranged therebeneath, wherein the biomass is fed to the first chamber (14) and the biomass is converted in the first chamber (14) into at least one intermediate process product, which is transferred from the first chamber (14) into the second chamber (15), wherein the intermediate process product is converted in the second chamber (15) into an end process product containing carbon particles, wherein the first chamber (14) is separated from the second chamber (15) by a funnel-shaped separation device (16), and the intermediate process product is transferred from the first chamber (14) into the second chamber (15) by means of gravity through at least one transfer opening (16.1) in the separation device (16), wherein the separation device (16) causes the intermediate process product to slide into the second chamber (15) as a result of gravity, and flows between the first chamber (14) and the second chamber (15) are reduced or eliminated by the separation device (16),
**characterised in that**
water and gas created in the second chamber (15) are transferred into the first chamber (14) via at least one through-opening (16.2) provided in the separation device (16), and water is removed from the first chamber (14) by a removal device (5.1).

2. The method according to claim 1, **characterised in that** the at least one reactor (5) is stabilised in respect of temperature by passing gases or vapours through said reactor.

3. The method according to claim 2, **characterised in that** flue gases from a combustion process or steam are used as gases and/or the gases or vapours are conducted through at least one heat exchanger (6) provided in the at least one reactor (5).

4. The method according to any one of the preceding claims, **characterised in that** the biomass is heated in a pre-heating device (4) prior to being introduced into the reactor (5).

5. The method according to claim 4, **characterised in that** the biomass is heated by removing from the reactor (5) dehydration-water in the liquid state produced by the dehydration, and by directly feeding said dehydration-water to the pre-heating device (4) and mixing said dehydration-water with the biomass in the pre-heating device (4).

6. An apparatus for hydrothermal carbonisation of biomass during throughputr, comprising a conveying device (3) for conveying biomass to at least one reactor (5), in which the biomass is dehydrated and carbonised, wherein the reactor (5) comprises at least a first, upper chamber (14) and a second, lower chamber (15), wherein the first, upper chamber (14) and the second, lower chamber (15) are separated from one another at least in portions by a separation device (16) for preventing flows, wherein the separation device (16) is formed in a funnel-shaped manner, tapering towards the second chamber (15), and the separation device (16) comprises at least one transfer opening (16.1) for the transfer of intermediate process products from the first chamber (14) into the second chamber (15),
**characterised in that**
the separation device (16) comprises at least one through-opening (16.2) for water and gas created in the second chamber (15), and a removal device (5.1) for removing water from the first, upper chamber (14) is provided in the region of the first, upper chamber (14).

7. The device according to claim 6, **characterised in that** the separation device (16) is provided in the lower reactor portion (5a) of the reactor (5).

8. The device according to either one of claims 6 or 7, **characterised in that** at least the upper side of the separation device (16) used as a sliding surface and/or the total inner wall of the reactor (5), the separation device (16), and the heat exchanger (6) comprise a coating formed of a high-sliding material, and/or **in that** the high-sliding material is polytetrafluoroethylene (PTFE), and/or **in that** the coating has a layer thickness of from 15 µm to 20 µm.

## Revendications

1. Procédé de carbonisation hydrothermale d'une biomasse au passage, lors duquel la biomasse est amenée par un système de convoyage (3) vers au moins un réacteur (5), dans lequel la biomasse est déshydratée et carbonisée et lors duquel la boue de charbon produite est prélevée hors du réacteur (5), le réacteur (5) comportant une première chambre (14), placée dans la région supérieure du réacteur et une deuxième chambre (15) placée sous celle-ci, la biomasse étant alimentée vers la première chambre (14) et dans la première chambre (14), la biomasse étant transformée en au moins un produit intermédiaire de processus qui est transféré de la première chambre (14) dans la deuxième chambre (15), dans la deuxième chambre (15), le produit intermédiaire de processus étant transformé en un produit final de processus contenant des particules de charbon, la première chambre (14) étant séparée de la deuxième chambre (15) par un système séparateur (16) en forme de trémie et le transfert du produit intermédiaire de processus de la première chambre (14) dans la deuxième chambre (15) s'effectuant sous l'effet de la gravité, à travers au moins une ouverture de transfert (16.1) dans le système séparateur (16), le système séparateur (16) provoquant un coulissement sous l'effet de la gravité du produit intermédiaire de processus dans la deuxième chambre (15) et des écoulements entre la première chambre (14) et la deuxième chambre (15) étant réduits ou supprimés par le système séparateur (16), **caractérisé en ce que** par l'intermédiaire d'une ouverture de passage (16.2) prévue dans le système séparateur (16), de l'eau et du gaz produits dans la deuxième chambre (15) passent dans la première chambre (14) et de l'eau est prélevée par un système de prélèvement (5.1) hors de la première chambre (14).

2. Procédé selon la revendication 1, **caractérisé en ce que** l'au moins un réacteur (5) est stabilisé en température par un passage de gaz ou de vapeurs.

3. Procédé selon la revendication 2, **caractérisé en ce qu'**en tant que gaz sont utilisés des gaz de fumée issus d'un processus de combustion ou de la vapeur d'eau et/ou **en ce que** les gaz ou vapeurs sont dirigés à travers au moins un échangeur thermique (6) prévu dans l'au moins un réacteur (5).

4. Procédé selon l'une quelconque des revendications précédentes, **caractérisé en ce qu'**avant l'introduction dans le réacteur (5), la biomasse est chauffée dans un système de préchauffage (4).

5. Procédé selon la revendication 4, **caractérisé en ce que** l'échauffement de la biomasse s'effectue par prélèvement à l'état liquide hors du réacteur (5) d'eau de déshydratation produite par la déshydratation, par alimentation directe de l'eau de déshydratation vers le système de préchauffage (4) et mélange de l'eau de déshydratation avec la biomasse dans le système de préchauffage (4).

6. Dispositif de carbonisation hydrothermale d'une biomasse au passage, pourvu d'un système de convoyage (3) de biomasse vers au moins un réacteur (5), dans lequel la biomasse est déshydratée et carbonisée, le réacteur (5) comportant au moins une première chambre (14) supérieure et au moins une deuxième chambre (15) inférieure, la première chambre (14) supérieure et la deuxième chambre (15) inférieure étant séparées l'une de l'autre au moins par endroits par un système séparateur (16), destiné à supprimer des écoulements, le système séparateur (16) étant conçu en forme de trémie en se rétrécissant vers la deuxième chambre (15) et le système séparateur (16) comportant au moins une ouverture de transfert (16.1) pour le transfert de produits intermédiaires de processus de la première chambre (14) dans la deuxième chambre (15), **caractérisé en ce que** le système séparateur (16) comporte au moins une ouverture de passage (16.2) pour de l'eau et du gaz produits dans la deuxième chambre (15) et dans la région de la première chambre (14) supérieure, il est prévu un système de prélèvement (5.1) pour prélever de l'eau hors de la première chambre (14) supérieure.

7. Dispositif selon la revendication 6, **caractérisé en ce que** le système séparateur (16) est prévu dans la section inférieure de réacteur (5a) du réacteur (5).

8. Dispositif selon l'une quelconque des revendications 6 et 7, **caractérisé en ce qu'**au moins la face supérieure du système séparateur (16) servant de surface de coulissement et/ou l'ensemble de la paroi intérieure du réacteur (5), le système séparateur (16) et l'échangeur thermique (6) comportent un revêtement en une matière extrêmement glissante et/ou **en ce que** la matière extrêmement glissante est du polytétrafluoréthylène (PTFE) et/ou **en ce que** le revêtement présente une épaisseur de couche de 15µm à 20µm.
